# EUROPEAN PATENT APPLICATION

(11) **EP 4 307 405 A1**
(43) Date of publication of application: **17.01.2024**
(21) Application number: 22795748.7
(22) Date of filing: 26.04.2022
(51) Int. Cl.: H01M 4/13, H01M 10/052, H01M 10/0567, H01M 10/0569

(54) **NONAQUEOUS-ELECTROLYTE ELECTRICITY STORAGE ELEMENT**

(30) Priority: 28.04.2021 JP 2021076713
(71) Applicant: GS Yuasa International Ltd., Kisshoin, Minami-ku, Kyoto-shi, Kyoto 601-8520 (JP)
(72) Inventor: HARADA Ryo, Kyoto-shi, Kyoto 601-8520 (JP)
(74) Representative: Isarpatent
(86) International application number: PCT/JP2022/018794
(87) International publication number: WO 2022/230835

(57) **Abstract**

A nonaqueous electrolyte energy storage device according to one aspect of the present invention includes a sulfur-containing positive electrode and a nonaqueous electrolyte containing a nonaqueous solvent containing an unsaturated cyclic carbonate, and the nonaqueous electrolyte further contains at least one ester selected from the group consisting of a chain ester and an unsubstituted saturated cyclic ester.

## Description

### TECHNICAL FIELD

The present invention relates to a nonaqueous electrolyte energy storage device.

### BACKGROUND ART

Nonaqueous electrolyte secondary batteries typified by lithium ion secondary batteries are widely used in electronic devices such as personal computers and communication terminals, motor vehicles, and the like since these secondary batteries have a high energy density. The nonaqueous electrolyte secondary batteries generally include a pair of electrodes, which are electrically separated from each other by a separator, and a nonaqueous electrolyte interposed between the electrodes, and are configured to allow lithium ions to be transferred between the two electrodes for charge-discharge. In addition, capacitors such as lithium ion capacitors and electric double layer capacitors are also widely used as nonaqueous electrolyte energy storage devices other than the nonaqueous electrolyte secondary batteries.

As nonaqueous electrolyte energy storage devices, nonaqueous electrolyte energy storage devices, such as lithium-sulfur batteries (Li-S batteries), in which sulfur is used as a positive active material are known (see Patent Document 1). Sulfur has a large theoretical capacity, and a nonaqueous electrolyte energy storage device in which sulfur is used as a positive active material is expected as an energy storage device having a high energy density.

### PRIOR ART DOCUMENT

### PATENT DOCUMENT

Patent Document 1: JP-A-2010-95390

### SUMMARY OF THE INVENTION

### PROBLEMS TO BE SOLVED BY THE INVENTION

In the nonaqueous electrolyte energy storage device in which sulfur is used as the positive active material, the inventors have found out that there is an advantage that high rate discharge performance may be enhanced by containing an unsaturated cyclic carbonate such as vinylene carbonate in a nonaqueous solvent of a nonaqueous electrolyte. However, a nonaqueous electrolyte energy storage device including a sulfur-containing positive electrode and a nonaqueous electrolyte containing an unsaturated cyclic carbonate does not have a sufficient initial charge capacity.

The present invention has been made in view of the above circumstances, and an object thereof is to provide a nonaqueous electrolyte energy storage device including a sulfur-containing positive electrode and a nonaqueous electrolyte containing an unsaturated cyclic carbonate, the nonaqueous electrolyte energy storage device having a high initial charge capacity.

### MEANS FOR SOLVING THE PROBLEMS

A nonaqueous electrolyte energy storage device according to one aspect of the present invention includes a sulfur-containing positive electrode and a nonaqueous electrolyte containing a nonaqueous solvent containing an unsaturated cyclic carbonate, and the nonaqueous electrolyte further contains at least one ester selected from the group consisting of a chain ester and an unsubstituted saturated cyclic ester.

### ADVANTAGES OF THE INVENTION

According to one aspect of the present invention, it is possible to provide a nonaqueous electrolyte energy storage device including a sulfur-containing positive electrode and a nonaqueous electrolyte containing an unsaturated cyclic carbonate, the nonaqueous electrolyte energy storage device having a high initial charge capacity.

### BRIEF DESCRIPTION OF THE DRAWINGS

Fig. 1 is a see-through perspective view illustrating an embodiment of a nonaqueous electrolyte energy storage device.
Fig. 2 is a schematic diagram illustrating an embodiment of an energy storage apparatus configured by assembling a plurality of nonaqueous electrolyte energy storage devices.

### MODE FOR CARRYING OUT THE INVENTION

An embodiment of the present invention provides the following aspects.

Clause 1.

A nonaqueous electrolyte energy storage device including: a sulfur-containing positive electrode; and a nonaqueous electrolyte containing a nonaqueous solvent containing an unsaturated cyclic carbonate, wherein the nonaqueous electrolyte further contains at least one ester selected from the group consisting of a chain ester and an unsubstituted saturated cyclic ester.

Clause 2.

The nonaqueous electrolyte energy storage device according to Clause 1, wherein the ester includes the chain ester.

Clause 3.

The nonaqueous electrolyte energy storage device according to Clause 2, wherein the chain ester is a fluorinated chain ester.

Clause 4.

The nonaqueous electrolyte energy storage device according to Clause 1, 2, or 3, wherein a content of the ester with respect to the nonaqueous solvent in the nonaqueous electrolyte is 3 vol% or more and 10 vol% or less.

Clause 5.

The nonaqueous electrolyte energy storage device according to any one of Clauses 1 to 4, wherein the content of the ester with respect to the nonaqueous solvent in the nonaqueous electrolyte is 4 vol% or more and 9 vol% or less.

First, the outline of a nonaqueous electrolyte energy storage device disclosed in the present specification will be described.

A nonaqueous electrolyte energy storage device according to one aspect of the present invention includes a sulfur-containing positive electrode and a nonaqueous electrolyte containing a nonaqueous solvent containing an unsaturated cyclic carbonate, and the nonaqueous electrolyte further contains at least one ester selected from the group consisting of a chain ester and an unsubstituted saturated cyclic ester.

The nonaqueous electrolyte energy storage device is a nonaqueous electrolyte energy storage device including a sulfur-containing positive electrode and a nonaqueous electrolyte containing an unsaturated cyclic carbonate, and has a large initial charge capacity. The reason for this is not clear, but it is presumed that at least one ester selected from the group consisting of the chain ester and the unsubstituted saturated cyclic ester contained in the nonaqueous electrolyte reacts with sulfur, a sulfur-containing compound (Li₂Sₙ or the like), or the like to form a good film on a surface of the positive electrode.

The term "unsaturation" in an unsaturated cyclic carbonate or the like refers to having a carbon-carbon double bond or a carbon-carbon triple bond in a molecule. The term "saturation" in a saturated cyclic ester or the like refers to having no carbon-carbon double bond or no carbon-carbon triple bond in a molecule. The term "unsubstitution" means that some or all of hydrogen atoms in the molecule are not substituted with other atoms or groups other than hydrocarbon groups. "At least one ester selected from the group consisting of the chain ester and the unsubstituted saturated cyclic ester" is not included in the nonaqueous solvent. The esters include esters of various oxoacids such as carboxylic acid esters, carbonic acid esters, sulfonic acid esters, sulfuric acid esters, and sulfurous acid esters.

The ester preferably includes the chain ester. The chain ester is more preferably a fluorinated chain ester. In such a case, the initial charge capacity of the nonaqueous electrolyte energy storage device can be further increased.

The content of the ester with respect to the nonaqueous solvent in the nonaqueous electrolyte is preferably 3 vol% or more and 10 vol% or less, and more preferably 4 vol% or more and 9 vol% or less. In such a case, the initial charge capacity of the nonaqueous electrolyte energy storage device can be further increased.

A nonaqueous electrolyte energy storage device, an energy storage apparatus, and a method for manufacturing a nonaqueous electrolyte energy storage device according to an embodiment of the present invention, and other embodiments will be described in detail. The names of the constituent members (constituent elements) used in the embodiments may be different from the names of the constituent members (constituent elements) used in the background art.

### <Nonaqueous electrolyte energy storage device>

A nonaqueous electrolyte energy storage device according to an embodiment of the present invention (hereinafter, also referred to simply as an "energy storage device") includes: an electrode assembly including a positive electrode, a negative electrode, and a separator; a nonaqueous electrolyte; and a case that houses the electrode assembly and the nonaqueous electrolyte. The electrode assembly is usually a stacked type in which a plurality of positive electrodes and a plurality of negative electrodes are stacked with a separator interposed therebetween, or a wound type in which a positive electrode and a negative electrode are wound in a state of being stacked with a separator interposed therebetween. The nonaqueous electrolyte is present in a state of being contained in the positive electrode, the negative electrode, and the separator. A nonaqueous electrolyte secondary battery (hereinafter, also simply referred to as a "secondary battery") will be described as an example of the nonaqueous electrolyte energy storage device.

### (Positive electrode)

The positive electrode has a positive substrate and a positive active material layer disposed directly on the positive substrate or over the positive substrate with an intermediate layer interposed therebetween.

The positive substrate has conductivity. Whether the positive substrate has "conductivity" or not is determined with the volume resistivity of 10⁷ Ω cm measured in accordance with JIS-H-0505 (1975) as a threshold. As the material of the positive substrate, a metal such as aluminum, titanium, tantalum, or stainless steel, or an alloy thereof is used. Among these metals and alloys, aluminum or an aluminum alloy is preferable from the viewpoints of electric potential resistance, high conductivity, and cost. Examples of the positive substrate include a foil, a deposited film, a mesh, and a porous material, and a foil is preferable from the viewpoint of cost. Accordingly, the positive substrate is preferably an aluminum foil or an aluminum alloy foil. Examples of the aluminum or aluminum alloy include A1085, A3003, A1N30, and the like specified in JIS-H-4000 (2014) or JIS-H-4160 (2006).

The average thickness of the positive substrate is preferably 3 pm or more and 50 pm or less, more preferably 5 pm or more and 40 pm or less, still more preferably 8 pm or more and 30 pm or less, and particularly preferably 10 pm or more and 25 pm or less. By setting the average thickness of the positive substrate to the above range, it is possible to increase the energy density per volume of a secondary battery while increasing the strength of the positive substrate. The "average thickness" of the positive electrode substrate and the negative electrode substrate described below refers to a value obtained by dividing a cutout mass in cutout of a substrate that has a predetermined area by a true density and a cutout area of the substrate.

The intermediate layer is a layer arranged between the positive substrate and the positive active material layer. The intermediate layer includes a conductive agent such as carbon particles to reduce contact resistance between the positive substrate and the positive active material layer. The configuration of the intermediate layer is not particularly limited, and includes, for example, a binder and a conductive agent.

The positive active material layer contains sulfur. The positive active material layer contains optional components such as a conductive agent, a binder (binding agent), a thickener, a filler, or the like as necessary. The positive active material layer is usually formed from a positive composite containing sulfur and other optional components.

Sulfur is a component that functions as a positive active material. Sulfur contained in the positive electrode or the positive active material layer may be sulfur simple substance or a sulfur compound. Examples of the sulfur compound include metal sulfides such as lithium sulfide and organic sulfur compounds such as organic disulfide compounds and carbon sulfide compounds. Sulfur has advantages such as a high theoretical capacity and low cost.

Sulfur may be in the form of a composite with a conductive agent (material having higher conductivity than sulfur) or the like. Examples of the composite include a composite in which sulfur is supported on a conductive agent or the like as a carrier, and specific examples thereof include a composite of sulfur and porous carbon (sulfur-porous carbon composite: SPC). The sulfur content in the SPC (the ratio of the mass of sulfur atom to the mass of the SPC) is preferably 50% by mass or more and 90% by mass or less, more preferably 60% by mass or more and 80% by mass or less. By setting the sulfur content in the SPC to the above range, it is possible to achieve both a large electric capacity and favorable conductivity.

The sulfur content in the positive active material layer (the ratio of the mass of sulfur atom to the mass of the positive active material layer) is preferably 40% by mass or more and 90% by mass or less, more preferably 50% by mass or more and 70% by mass or less. When the SPC is used, the content of the SPC in the positive active material layer is preferably 60% by mass or more and 95% by mass or less, and more preferably 70% by mass or more and 90% by mass or less. By setting the content of sulfur or the SPC to the above range, it is possible to achieve both a large electric capacity and favorable conductivity, and increase the energy density.

The positive active material layer may contain a positive active material other than sulfur. However, the content of sulfur (sulfur element) in the entire positive active material is preferably 50% by mass or more, more preferably 70% by mass or more, still more preferably 90% by mass or more, yet still more preferably 99% by mass or more, particularly preferably 100% by mass.

The conductive agent is not particularly limited as long as it is a conductive material. This conductive agent does not include a conductive agent that constitutes a composite with sulfur. Examples of such a conductive agent include carbonaceous materials, metals, and conductive ceramics. Examples of the carbonaceous materials include graphite, non-graphitic carbon, and graphene-based carbon. Examples of the non-graphitic carbon include carbon nanofibers, pitch-based carbon fibers, and carbon black. Examples of the carbon black include furnace black, acetylene black, and ketjen black. Examples of the graphene-based carbon include graphene, carbon nanotubes (CNTs), and fullerene. Examples of the form of the conductive agent include a powdery form and a fibrous form. As the conductive agent, one of these materials may be used singly, or two or more thereof may be used in mixture. In addition, these materials may be used in combination. For example, a material obtained by compositing carbon black with CNT may be used. Among them, carbon black is preferable, an in particular, acetylene black is preferable, from the viewpoint of electron conductivity and coatability.

The content of the conductive agent (excluding the conductive agent in the composite of sulfur and the conductive agent) in the positive active material layer is preferably 1% by mass or more and 20% by mass or less, more preferably 3% by mass or more and 15% by mass or less. By setting the content of the conductive agent in the above range, the energy density of the secondary battery can be enhanced.

Examples of the binder include: thermoplastic resins such as fluororesin (polytetrafluoroethylene (PTFE), polyvinylidene fluoride (PVDF), etc.), polyethylene, polypropylene, polyacryl, and polyimide; elastomers such as ethylene-propylene-diene rubber (EPDM), sulfonated EPDM, styrenebutadiene rubber (SBR), and fluororubber; and polysaccharide polymers.

The content of the binder in the positive active material layer is preferably 1% by mass or more and 10% by mass or less, more preferably 3% by mass or more and 9% by mass or less. By setting the binder content to the above range, the positive active material, the composite and the like can be stably held.

Examples of the thickener include polysaccharide polymers such as carboxymethylcellulose (CMC), and methylcellulose. When the thickener has a functional group that is reactive with lithium and the like, the functional group may be deactivated by methylation or the like in advance. The content of the thickener in the positive active material layer is preferably 0.5% by mass or more and 10% by mass or less, more preferably 2% by mass or more and 5% by mass or less.

The filler is not particularly limited. Examples of the filler include polyolefins such as polypropylene and polyethylene, inorganic oxides such as silicon dioxide, alumina, titanium dioxide, calcium oxide, strontium oxide, barium oxide, magnesium oxide and aluminosilicate, hydroxides such as magnesium hydroxide, calcium hydroxide and aluminum hydroxide, carbonates such as calcium carbonate, hardly soluble ionic crystals of calcium fluoride, barium fluoride, and barium sulfate, nitrides such as aluminum nitride and silicon nitride, and substances derived from mineral resources, such as talc, montmorillonite, boehmite, zeolite, apatite, kaolin, mullite, spinel, olivine, sericite, bentonite and mica, or artificial products thereof. The content of the filler in the positive active material layer is preferably 0.1% by mass or more and 10% by mass or less. In an embodiment of the present invention, a filler may not be contained in the positive active material layer.

The positive active material layer may contain a typical nonmetal element such as B, N, P, F, Cl, Br, or I, a typical metal element such as Li, Na, Mg, Al, K, Ca, Zn, Ga, Ge, Sn, Sr, or Ba, and a transition metal element such as Sc, Ti, V, Cr, Mn, Fe, Co, Ni, Cu, Mo, Zr, Nb, or W as components other than sulfur and other positive active materials, a conductive agent, a binder, a thickener, and a filler.

### (Negative electrode)

The negative electrode has a negative substrate and a negative active material layer disposed directly on the negative substrate or over the negative substrate with an intermediate layer interposed therebetween. The configuration of the intermediate layer is not particularly limited, and can be selected from the configurations exemplified for the positive electrode, for example.

The negative substrate has conductivity. As the material of the negative substrate, a metal such as copper, nickel, stainless steel, nickel-plated steel, or aluminum, an alloy thereof, a carbonaceous material, or the like is used. Among these metals and alloys, copper or a copper alloy is preferable. Examples of the negative substrate include a foil, a deposited film, a mesh, and a porous material, and a foil is preferable from the viewpoint of cost. Accordingly, the negative substrate is preferably a copper foil or a copper alloy foil. Examples of the copper foil include rolled copper foils and electrolytic copper foils.

The average thickness of the negative substrate is preferably 2 pm or more and 35 pm or less, more preferably 3 pm or more and 30 pm or less, still more preferably 4 pm or more and 25 pm or less, and particularly preferably 5 pm or more and 20 pm or less. When the average thickness of the negative substrate is within the above range, it is possible to enhance the energy density per volume of a secondary battery while increasing the strength of the negative substrate.

The negative active material layer contains a negative active material. The negative active material layer contains optional components such as a conductive agent, a binder, a thickener, and a filler, if necessary. The optional components such as a conductive agent, a binder, a thickener, and a filler can be selected from the materials exemplified for the positive electrode. The negative active material layer may be formed from a negative composite containing a negative active material and other optional components, and when the negative active material is a metal such as metallic lithium, the negative active material layer may be formed from a foil or the like and may not be formed from the negative composite.

The negative active material layer may contain a typical nonmetal element such as B, N, P, F, Cl, Br, or I, a typical metal element such as Li, Na, Mg, Al, K, Ca, Zn, Ga, Ge, Sn, Sr, and Ba or a transition metal element such as Sc, Ti, V, Cr, Mn, Fe, Co, Ni, Cu, Mo, Zr, Ta, Hf, Nb, or W as a component other than the negative active material, the conductive agent, the binder, the thickener, and the filler.

The negative active material can be appropriately selected from known negative active materials. As the negative active material for a lithium ion secondary battery, a material capable of absorbing and releasing lithium ions is usually used. Examples of the negative active material include metallic lithium; metals or metalloids such as Si and Sn; metal oxides or metalloid oxides such as a Si oxide, a Ti oxide, and a Sn oxide; titanium-containing oxides such as Li₄Ti₅O₁₂, LiTiO₂, and TiNb₂O₇; a polyphosphoric acid compound; silicon carbide; and carbon materials such as graphite and non-graphitic carbon (easily graphitizable carbon or hardly graphitizable carbon). In the negative active material layer, one of these materials may be used singly, or two or more of these materials may be used in mixture. In the lithium ion secondary battery, when the positive active material does not contain a lithium element during production, a negative active material containing a lithium element is usually used as the negative active material.

The term "graphite" refers to a carbon material in which an average lattice spacing (d₀₀₂) of the (002) plane determined by an X-ray diffraction method before charge-discharge or in a discharged state is 0.33 nm or more and less than 0.34 nm. Examples of the graphite include natural graphite and artificial graphite. Artificial graphite is preferable from the viewpoint that a material having stable physical properties can be obtained.

The term "non-graphitic carbon" refers to a carbon material in which the average grid spacing (d₀₀₂) of the (002) plane determined by the X-ray diffraction method before charge-discharge or in the discharged state is 0.34 nm or more and 0.42 nm or less. Examples of the non-graphitic carbon include hardly graphitizable carbon and easily graphitizable carbon. Examples of the non-graphitic carbon include a resin-derived material, a petroleum pitch or a material derived from petroleum pitch, a petroleum coke or a material derived from petroleum coke, a plant-derived material, and an alcohol derived material.

In this regard, the "discharged state" means a state discharged so that lithium ions that can be stored and released in association with charge-discharge are sufficiently released from the carbon material as the negative active material. For example, the "discharged state" refers to a state where an open circuit voltage is 0.7 V or more in a monopolar battery in which a negative electrode containing a carbon material as a negative active material is used as a working electrode and metal Li is used as a counter electrode.

The "hardly graphitizable carbon" refers to a carbon material in which the d₀₀₂ is 0.36 nm or more and 0.42 nm or less.

The "easily graphitizable carbon" refers to a carbon material in which the d₀₀₂ is 0.34 nm or more and less than 0.36 nm.

The negative active material is typically particles (powder). The average particle size of the negative active material can be, for example, 1 nm or more and 100 pm or less. When the negative active material is a carbon material, a titanium-containing oxide, or a polyphosphoric acid compound, the average particle size thereof may be 1 pm or more and 100 pm or less. When the negative active material is Si, Sn, an oxide of Si, an oxide of Sn, or the like, the average particle size thereof may be 1 nm or more and 1 pm or less. By setting the average particle size of the negative active material to be equal to or greater than the above lower limit, the negative active material is easily produced or handled. By setting the average particle size of the negative active material to be equal to or less than the above upper limit, the electron conductivity of the positive active material layer is improved. A crusher or a classifier is used to obtain a powder with a predetermined particle size. When the negative active material is a metal such as metallic lithium, the negative active material may have the form of a foil.

In an embodiment of the present invention, the negative active material preferably contains metallic lithium. That is, the negative electrode or the negative active material layer preferably contains metallic lithium. Metallic lithium may be pure metallic lithium composed essentially of lithium element, or a lithium alloy containing other metal elements. Examples of the lithium alloy include a lithium silver alloy, a lithium zinc alloy, a lithium calcium alloy, a lithium aluminum alloy, a lithium magnesium alloy, and a lithium indium alloy. The lithium alloy may contain multiple metal elements other than lithium.

The negative active material layer may be a non-porous layer (solid layer) or a porous layer. The average thickness of the negative active material layer is preferably 5 pm or more and 1,000 pm or less, more preferably 10 pm or more and 500 pm or less, still more preferably 30 pm or more and 300 pm or less. The "average thickness" of the negative active material layer refers to the average value of thicknesses measured at arbitrary five points of the negative active material layer.

In an embodiment of the present invention, the content of the negative active material in the negative active material layer is preferably 60% by mass or more and 99% by mass or less, more preferably 90% by mass or more and 98% by mass or less. By setting the content of the negative active material in the above range, it is possible to achieve both high energy density and productivity of the negative active material layer. When the negative active material contains metallic lithium, the content of lithium element in the negative active material layer is preferably 80% by mass or more, more preferably 90% by mass or more, still more preferably 99% by mass or more. The upper limit of the content of the lithium element in the negative active material layer may be 100% by mass.

### (Separator)

The separator can be appropriately selected from known separators. As the separator, for example, a separator composed of only a substrate layer, a separator in which a heat resistant layer containing heat resistant particles and a binder is formed on one surface or both surfaces of the substrate layer, or the like can be used. Examples of the form of the substrate layer of the separator include a woven fabric, a nonwoven fabric, and a porous resin film. Among these forms, a porous resin film is preferable from the viewpoint of strength, and a nonwoven fabric is preferable from the viewpoint of liquid retaining properties of the nonaqueous electrolyte. As the material for the substrate layer of the separator, for example, a polyolefin such as polyethylene or polypropylene is preferable from the viewpoint of shutdown function, and polyimide, aramid or the like is preferable from the viewpoint of resistance to oxidative decomposition. As the substrate layer of the separator, a material obtained by combining these resins may be used.

The heat resistant particles contained in the heat resistant layer preferably have a mass loss of 5% or less when the temperature is raised from room temperature to 500°C in the air atmosphere of 1 atm, and more preferably have a mass loss of 5% or less when the temperature is raised from room temperature to 800°C. Examples of materials that have a mass loss equal to or less than a predetermined value include inorganic compounds. Examples of the inorganic compounds include oxides such as iron oxide, silicon oxide, aluminum oxide, titanium oxide, zirconium oxide, calcium oxide, strontium oxide, barium oxide, magnesium oxide and aluminosilicate; nitrides such as aluminum nitride and silicon nitride; carbonates such as calcium carbonate; sulfates such as barium sulfate; hardly soluble ionic crystals such as calcium fluoride, barium fluoride, barium titanate; covalently bonded crystals such as silicon and diamond; and substances derived from mineral resources, such as talc, montmorillonite, boehmite, zeolite, apatite, kaolin, mullite, spinel, olivine, sericite, bentonite, and mica, and artificial products thereof. As the inorganic compounds, simple substances or complexes of these substances may be used alone, or two or more thereof may be used in mixture. Among these inorganic compounds, silicon oxide, aluminum oxide, or aluminosilicate is preferable from the viewpoint of safety of the secondary battery.

A porosity of the separator is preferably 80 vol% or less from the viewpoint of strength, and is preferably 20 vol% or more from the viewpoint of discharge performance. The term "porosity" herein is a volume-based value, and means a value measured with a mercury porosimeter.

As the separator, a polymer gel composed of a polymer and a nonaqueous electrolyte may be used. Examples of the polymer include a polyacrylonitrile, a polyethylene oxide, a polypropylene oxide, a polymethyl methacrylate, a polyvinyl acetate, a polyvinylpyrrolidone, and a polyvinylidene fluoride. When the polymer gel is used, the effect of suppressing liquid leakage is acquired. As the separator, a polymer gel may be used in combination with a porous resin film, a nonwoven fabric, or the like as described above.

### (Nonaqueous electrolyte)

As the nonaqueous electrolyte, a nonaqueous electrolyte solution containing a nonaqueous solvent and an electrolyte salt dissolved in the nonaqueous solvent is usually suitably used. The nonaqueous electrolyte such as a nonaqueous electrolyte solution further contains at least one ester X selected from the group consisting of the chain ester and the unsubstituted saturated cyclic ester.

### [Nonaqueous solvent]

The nonaqueous solvent contains an unsaturated cyclic carbonate. When the unsaturated cyclic carbonate is contained in the nonaqueous solvent, high rate discharge performance and the like of the secondary battery can be enhanced. The nonaqueous solvent does not contain at least one ester X selected from the group consisting of the chain ester and the unsubstituted saturated cyclic ester. The unsaturated cyclic carbonate has a carbon-carbon double bond or a carbon-carbon triple bond in the molecule, and preferably has a carbon-carbon double bond in the molecule. In the unsaturated cyclic carbonate, the carbon-carbon double bond or the carbon-carbon triple bond may be present in the ring structure or may be present outside the ring structure, and is preferably present in the ring structure. The unsaturated cyclic carbonate may be one in which some or all of the hydrogen atoms are substituted with halogen.

Examples of the unsaturated cyclic carbonate include vinylene carbonate (VC), fluorovinylene carbonate, methylvinylene carbonate, fluoromethylvinylene carbonate, ethylvinylene carbonate, propylvinylene carbonate, butylvinylene carbonate, dimethylvinylene carbonate, diethylvinylene carbonate, dipropylvinylene carbonate, trifluoromethylvinylene carbonate, and vinylethylene carbonate, and among these, VC is preferable. One or two or more of the unsaturated cyclic carbonates can be used.

The content of the unsaturated cyclic carbonate in the nonaqueous solvent is preferably 20 vol% or more and 80 vol% or less, more preferably 35 vol% or more and 65 vol% or less, still more preferably 40 vol% or more and 60 vol% or less. By setting the content of the unsaturated cyclic carbonate to be equal to or more than the above lower limit, the high rate discharge performance can be enhanced. By setting the content of the unsaturated cyclic carbonate to be equal to or less than the above upper limit, the initial charge capacity can be further increased.

The nonaqueous solvent may further contain a nonaqueous solvent other than the unsaturated cyclic carbonate. Examples of other nonaqueous solvents include halogenated saturated cyclic carbonates, ethers, amides, and nitriles. The halogenated saturated cyclic carbonate refers to a saturated cyclic carbonate in which some or all of the hydrogen atoms are substituted with halogen. Ether, amide, nitrile, and the like may be those in which some or all of the hydrogen atoms are substituted with halogen. One or two or more of the other nonaqueous solvents can be used.

As the other nonaqueous solvent, a halogenated saturated cyclic carbonate is preferable, and a fluorinated saturated cyclic carbonate is more preferable. Containing the halogenated saturated cyclic carbonate makes it possible to enhance oxidation resistance and the like of the nonaqueous electrolyte solution. Examples of the halogenated saturated cyclic carbonate include chloroethylene carbonate, fluoroethylene carbonate (FEC), and difluoroethylene carbonate (DFEC), and among these, FEC and DFEC which are fluorinated saturated cyclic carbonates are preferable.

The content of the halogenated saturated cyclic carbonate in the nonaqueous solvent is preferably 20 vol% or more and 80 vol% or less, more preferably 35 vol% or more and 65 vol% or less, still more preferably 40 vol% or more and 60 vol% or less.

The nonaqueous solvent may be substantially composed only of an unsaturated cyclic carbonate and a halogenated saturated cyclic carbonate. In such a case, the high rate discharge performance of the secondary battery can be further enhanced. A total content of the unsaturated cyclic carbonate and the halogenated saturated cyclic carbonate in the nonaqueous solvent is preferably 70 vol% or more, more preferably 90 vol% or more, still more preferably 99 vol% or more, and particularly preferably 100 vol%.

### [Electrolyte salt]

The electrolyte salt can be appropriately selected from known electrolyte salts. Examples of the electrolyte salt include a lithium salt, a sodium salt, a potassium salt, a magnesium salt, and an onium salt. Among these, a lithium salt is preferable.

Examples of the lithium salt include inorganic lithium salts such as LiPF₆, LiPO₂F₂, LiBF₄, LiClO₄, and LiN(SO₂F)₂, lithium oxalates such as lithium bis(oxalate)borate (LiBOB), lithium difluorooxalatoborate (LiFOB), and lithium bis(oxalate)difluorophosphate (LiFOP), and lithium salts having a halogenated hydrocarbon group, such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃. Among these, inorganic lithium salts are preferable, and LiPF₆ and LiN(SO₂F)₂ are more preferable. In addition, imide salts such as LiN(SO₂F)₂, LiN(SO₂CF₃)₂, LiN(SO₂C₂F₅)₂, and LiN(SO₂CF₃)(SO₂C₄F₉) are also preferable.

The content of the electrolyte salt in the nonaqueous electrolyte solution is, at 20°C under 1 atm, preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, particularly preferably 0.7 mol/dm³ or more and 1.5 mol/dm³ or less. When the content of the electrolyte salt is in the above range, it is possible to increase the ionic conductivity of the nonaqueous electrolyte solution.

### [Ester X]

The ester X is at least one selected from the group consisting of the chain ester and the unsubstituted saturated cyclic ester.

Examples of the chain ester include a chain carboxylic acid ester, a chain carbonate (chain carbonate ester), a chain sulfonic acid ester, a chain sulfuric acid ester, and a chain sulfurous acid ester, a chain carboxylic acid ester and a chain carbonate are preferable, and a chain carbonate is more preferable. The chain ester may be a saturated chain ester or an unsaturated chain ester, and is preferably a saturated chain ester.

The chain ester may be one in which some or all of hydrogen atoms are substituted with halogen (halogenated chain ester), and is preferably a fluorinated chain ester. Among the fluorinated chain esters, fluorinated chain carboxylic acid esters and fluorinated chain carbonates are more preferable, and fluorinated chain carbonates are still more preferable.

Examples of the chain carboxylic acid ester include methyl acetate, ethyl acetate, propyl acetate, 2,2,2-trifluoroethyl acetate, 2,2,2-trifluoroethyl trifluoroacetate, methyl propionate, ethyl propionate, ethyl 2-fluoropropionate, and propyl propionate. Among these, 2,2,2-trifluoroethyl acetate, 2,2,2-trifluoroethyl trifluoroacetate, and ethyl 2-fluoropropionate, which are fluorinated chain carboxylic acid esters, are preferable.

Examples of the chain carbonate include diethyl carbonate (DEC), dimethyl carbonate (DMC), ethyl methyl carbonate (EMC), diphenyl carbonate, 2,2,2-trifluoroethyl methyl carbonate (TFEMC), and bis(2,2,2 trifluoroethyl) carbonate (BTFEC). Among these, TFEMC and BTFEC, which are fluorinated chain carbonates, are preferable and TFEMC is more preferable.

Examples of the chain sulfonic acid ester include methyl methanesulfonate, busulfan, and methyl trifluoromethanesulfonate.

Examples of the chain sulfuric acid ester include dimethyl sulfate.

Examples of the chain sulfurous acid ester include dimethyl sulfite.

Examples of the unsubstituted saturated cyclic ester include an unsubstituted saturated cyclic carboxylic acid ester, an unsubstituted saturated cyclic carbonate (unsubstituted saturated cyclic carbonate ester), an unsubstituted saturated cyclic sulfonic acid ester, an unsubstituted saturated cyclic sulfate ester, and an unsubstituted saturated cyclic sulfurous acid ester, an unsubstituted saturated cyclic carboxylic acid ester and an unsubstituted saturated cyclic carbonate are preferable, and an unsubstituted saturated cyclic carbonate is more preferred.

Examples of the unsubstituted saturated cyclic carboxylic acid ester include γ-butyrolactone and δ-valerolactone.

Examples of the unsubstituted saturated cyclic carbonate include ethylene carbonate (EC), propylene carbonate (PC), and butylene carbonate (BC). Among them, EC is preferable.

Examples of the unsubstituted saturated cyclic sulfonic acid ester include propane sultone and butane sultone.

Examples of the unsubstituted saturated cyclic sulfuric acid ester include ethylene sulfate and propylene sulfate.

Examples of the unsubstituted saturated cyclic sulfurous acid ester include ethylene sulfite and propylene sulfite.

The content of the ester X when the content of the nonaqueous solvent is 100 vol% may be, for example, 1 vol% or more and 20 vol% or less, is preferably 3 vol% or more and 10 vol% or less, more preferably 4 vol% or more and 9 vol% or less, and the upper limit thereof is more preferably 7 vol%. By setting the content of the ester X within the above range, the initial charge capacity of the secondary battery can be further increased.

The nonaqueous electrolyte solution may contain an additive other than the ester X as a component other than the nonaqueous solvent and the electrolyte salt. Examples of other additives include: aromatic compounds such as biphenyl, alkylbiphenyl, terphenyl, partly hydrogenated terphenyl, cyclohexylbenzene, t-butylbenzene, t-amylbenzene, diphenyl ether, and dibenzofuran; partial halides of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic anhydride, and cyclohexanedicarboxylic anhydride; propenesultone, sulfolane, dimethyl sulfone, diethyl sulfone, dimethyl sulfoxide, diethyl sulfoxide, tetramethylene sulfoxide, diphenyl sulfide, thioanisole, diphenyl disulfide, dipyridinium disulfide, perfluorooctane, tristrimethylsilyl borate, tristrimethylsilyl phosphate, and tetrakistrimethylsilyl titanate. One of the other additives may be used singly, or two or more thereof may be used in mixture.

The content of other additives contained in the nonaqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to a total mass of the nonaqueous electrolyte solution. The content of the other additives falls within the above range, thereby making it possible to improve capacity retention performance or cycle performance after high-temperature storage, and to further improve safety.

As the nonaqueous electrolyte, a nonaqueous electrolyte solution and a solid electrolyte may be used concurrently. The solid electrolyte can be selected from arbitrary materials, which exhibit lithium ion conductivity and are solid at normal temperature (for example, from 15°C to 25°C). Examples of the solid electrolyte include sulfide solid electrolytes, oxide solid electrolytes, oxynitride solid electrolytes, and polymer solid electrolytes.

The shape of the nonaqueous electrolyte energy storage device according to the present embodiment is not particularly limited, and examples thereof include cylindrical batteries, prismatic batteries, flat batteries, coin batteries and button batteries.

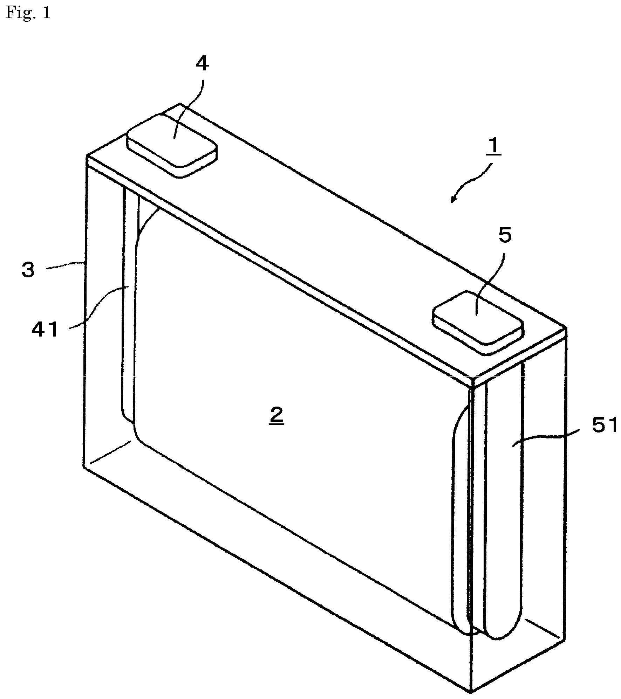

Fig. 1 illustrates a nonaqueous electrolyte energy storage device 1 as an example of prismatic batteries. Fig. 1 is a view illustrating the inside of a case in a perspective manner. An electrode assembly 2 including a positive electrode and a negative electrode wound with a separator interposed therebetween is housed in a prismatic battery case 3. The positive electrode is electrically connected to a positive electrode terminal 4 via a positive electrode lead 41. The negative electrode is electrically connected to a negative electrode terminal 5 via a negative electrode lead 51.

### <Energy storage apparatus>

The nonaqueous electrolyte energy storage device according to the present embodiment can be mounted as an energy storage unit (battery module) configured by assembling a plurality of nonaqueous electrolyte energy storage devices 1 on a power source for motor vehicles such as electric vehicles (EV), hybrid vehicles (HEV), and plug-in hybrid vehicles (PHEV), power source for electronic devices such as personal computers and communication terminals, or a power source for power storage, or the like. In this case, the technique of the present invention may be applied to at least one nonaqueous electrolyte energy storage device included in the energy storage unit.

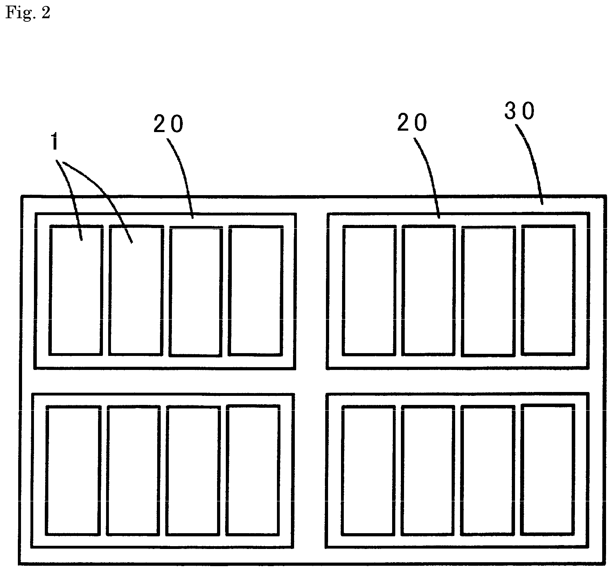

Fig. 2 illustrates an example of an energy storage apparatus 30 formed by assembling energy storage units 20 in each of which two or more electrically connected nonaqueous electrolyte energy storage devices 1 are assembled. The energy storage apparatus 30 may include a busbar (not illustrated) for electrically connecting two or more nonaqueous electrolyte energy storage devices 1 and a busbar (not illustrated) for electrically connecting two or more energy storage units 20. The energy storage unit 20 or the energy storage apparatus 30 may include a state monitor (not illustrated) that monitors the state of one or more nonaqueous electrolyte energy storage devices.

### <Method for manufacturing nonaqueous electrolyte energy storage device>

A method for manufacturing the nonaqueous electrolyte energy storage device of the present embodiment can be appropriately selected from known methods. The manufacturing method includes, for example, preparing an electrode assembly, preparing a nonaqueous electrolyte, and housing the electrode assembly and the nonaqueous electrolyte in a case. The preparation of the electrode assembly includes: preparing a positive electrode and a negative electrode, and forming an electrode assembly by stacking or winding the positive electrode and the negative electrode with a separator interposed therebetween.

### <Other embodiments>

The nonaqueous electrolyte energy storage device according to the present invention is not limited to the embodiment described above, and various changes may be made without departing from the gist of the present invention. For example, to the configuration of one embodiment, the configuration of another embodiment can be added, and a part of the configuration of one embodiment can be replaced by the configuration of another embodiment or a well-known technique. Furthermore, a part of the configuration according to one embodiment can be deleted. In addition, a well-known technique can be added to the configuration according to one embodiment.

In the embodiment, a case where the nonaqueous electrolyte energy storage device is used as a nonaqueous electrolyte secondary battery (for example, lithium ion secondary battery) that is chargeable and dischargeable has been described, but the type, shape, dimensions, capacity, and the like of the nonaqueous electrolyte energy storage device are arbitrary. The present invention can also be applied to capacitors such as various secondary batteries, electric double layer capacitors, or lithium ion capacitors.

While the electrode assembly with the positive electrode and the negative electrode stacked with the separator interposed therebetween has been described in the above embodiment, the electrode assembly does not have to include the separator. For example, the positive electrode and the negative electrode may be brought into direct contact with each other in a state where a layer not exhibiting conductivity is formed on the active material layer of the positive electrode or negative electrode.

### EXAMPLES

Hereinafter, the present invention will be described in more detail with reference to Examples, but the present invention is not limited to the following Examples.

### [Example 1]

### (Preparation of positive electrode)

Sulfur and porous carbon (CNovel) (manufactured by Toyo Tanso Co., Ltd.) were mixed at a mass ratio of 72 : 28. The mixture was placed in a sealed electric furnace. Argon flowed for 1 hour, then the temperature was increased to 150°C at a rate of temperature increase of 5°C/min, the mixture was held at 150°C for 5 hours and then cooled to 80°C, which was the temperature at which sulfur was solidified, then the temperature was increased again to 300°C at a rate of temperature increase of 5°C/min, and the mixture was held at 300°C for 2 hours to perform heat treatment, whereby a composite (sulfur-porous carbon composite: SPC) was produced.

A positive composite paste containing water as a dispersion medium, and containing the composite obtained above, acetylene black as a conductive agent, CMC as a thickener, and SBR as a binder at a mass ratio of 80 : 10 : 3.6 : 6.4 was applied to an aluminum positive substrate and drying was performed to fabricate a positive electrode.

### (Preparation of negative electrode)

A sheet-shaped metallic lithium was prepared as a negative electrode.

### (Preparation of nonaqueous electrolyte)

A nonaqueous solvent obtained by mixing vinylene carbonate (VC) and fluoroethylene carbonate (FEC) at a volume ratio of 50 : 50 was contained with LiN(SO₂CF₃)₂ as an electrolyte salt in a content of 1.0 mol/dm³ and ethylene carbonate (EC) as the ester X in a content of 3 vol% based on 100 vol% of a nonaqueous solvent to prepare a nonaqueous electrolyte.

### (Assembly of nonaqueous electrolyte energy storage device)

As a separator, a polyethylene microporous membrane was prepared. A nonaqueous electrolyte energy storage device (secondary battery) of Example 1 was obtained using the positive electrode, negative electrode, separator, and nonaqueous electrolyte.

### [Examples 2 to 9 and Comparative Example 1]

Nonaqueous electrolyte energy storage devices of Examples 2 to 9 and Comparative Example 1 were obtained similarly to Example 1 except that the type and content of the ester X used for preparation of the nonaqueous electrolyte were as shown in Table 1. In Table 1, TFEMC represents 2,2,2-trifluoroethyl methyl carbonate, EA represents ethyl acetate, and FEA represents 2,2,2-trifluoroethyl acetate. In Comparative Example 1, the nonaqueous electrolyte did not contain the ester X.

### [Evaluation]

### (Initial charge capacity measurement)

On each of the nonaqueous electrolyte energy storage devices thus obtained, constant current discharge was performed at a current of 0.1 C to 1.0 V at 25°C as the initial discharge. After discharge, constant current charge was performed at a current of 0.2 C to 3.0 V at 25°C as the initial charge. The measured initial charge capacity (amount of charge) is shown in Table 1. The initial charge capacity is shown as a capacity per mass of sulfur contained in the positive electrode.

**[Table 1]**

| | Ester X | | Initial charge capacity (mAh/g) |
|---|---|---|---|
| | Type | Content (vol%) | |
| Example 1 | EC | 3 | 889 |
| Example 2 | EC | 5 | 914 |
| Example 3 | EC | 10 | 893 |
| Example 4 | TFEMC | 3 | 891 |
| Example 5 | TFEMC | 5 | 958 |
| Example 6 | TFEMC | 10 | 890 |
| Example 7 | EA | 5 | 899 |
| Example 8 | FEA | 5 | 944 |
| Example 9 | FEA | 10 | 864 |
| Comparative Example 1 | - | 0 | 852 |

As shown in Table 1, in each of the nonaqueous electrolyte energy storage devices of Examples 1 to 9, since the nonaqueous electrolyte contains at least one ester X selected from the group consisting of a chain ester and an unsubstituted saturated cyclic ester, the initial charge capacity is increased. Comparison among Examples 2, 5, 7, and 8 in which the content of the ester X is 5 vol% shows that when the ester X is a fluorinated chain ester, the initial charge capacity is further increased. Regarding the content of the ester X, it is found that the initial charge capacity is further increased when the content is 4 vol% or more and 9 vol% or less.

### [Reference Example 1]

A nonaqueous electrolyte energy storage device of Reference Example 1 was obtained similarly to Comparative Example 1 except that VC of the nonaqueous solvent was changed to TFEMC, and the initial charge capacity measurement was similarly performed. The nonaqueous electrolyte energy storage device of Reference Example 1 had an initial charge capacity of 862 mAh/g. Comparison between Comparative Example 1 (852 mAh/g) and Reference Example 1 (862 mAh/g) shows that when the nonaqueous solvent contains an unsaturated cyclic carbonate, the initial charge capacity tends to decrease. However, as in the nonaqueous electrolyte energy storage devices of Examples 1 to 9, since the nonaqueous electrolyte in which the nonaqueous solvent contains an unsaturated cyclic carbonate further contains a predetermined ester X, the initial charge capacity value was larger than that of any of the nonaqueous electrolyte energy storage devices of Comparative Example 1 and Reference Example 1 which did not contain any of the unsaturated cyclic carbonate and the ester X.

### INDUSTRIAL APPLICABILITY

The present invention can be applied to a nonaqueous electrolyte energy storage device used as a power source for electronic devices such as personal computers and communication terminals, motor vehicles, and the like.

### DESCRIPTION OF REFERENCE SIGNS

1: Nonaqueous electrolyte energy storage device
2: Electrode assembly
3: Case
4: Positive electrode terminal
41: Positive electrode lead
5: Negative electrode terminal
51: Negative electrode lead
20: Energy storage unit
30: Energy storage apparatus

## Claims

1. A nonaqueous electrolyte energy storage device comprising:
a sulfur-containing positive electrode; and
a nonaqueous electrolyte containing a nonaqueous solvent containing an unsaturated cyclic carbonate,
wherein the nonaqueous electrolyte further contains at least one ester selected from the group consisting of a chain ester and an unsubstituted saturated cyclic ester.

2. The nonaqueous electrolyte energy storage device according to claim 1, wherein the ester includes the chain ester.

3. The nonaqueous electrolyte energy storage device according to claim 2, wherein the chain ester is a fluorinated chain ester.

4. The nonaqueous electrolyte energy storage device according to claim 1, 2, or 3, wherein a content of the ester with respect to the nonaqueous solvent in the nonaqueous electrolyte is 3 vol% or more and 10 vol% or less.

5. The nonaqueous electrolyte energy storage device according to any one of claims 1 to 4, wherein the content of the ester with respect to the nonaqueous solvent in the nonaqueous electrolyte is 4 vol% or more and 9 vol% or less.
